# EUROPEAN PATENT APPLICATION

(11) **EP 4 618 213 A1**
(43) Date of publication of application: **17.09.2025**
(21) Application number: 23888579.2
(22) Date of filing: 31.10.2023
(51) Int. Cl.: H01M 10/052, H01M 4/38, H01M 4/485, H01M 4/505, H01M 4/525, H01M 4/58, H01M 4/587, H01M 4/62, H01M 10/0585, H01M 10/0587, H01M 50/105

(54) **SECONDARY BATTERY, POSITIVE ELECTRODE, AND COMPOSITION FOR POSITIVE ELECTRODE MIXTURE LAYER**

(30) Priority: 09.11.2022 JP 2022179914
(71) Applicant: Resonac Corporation, Tokyo 105-7325 (JP)
(72) Inventor: TONEGAWA, Akihisa, Tokyo 105-7325 (JP); KOHNO, Daisuke, Tokyo 105-7325 (JP); INOSE, Tsuyoshi, Tokyo 105-7325 (JP); INOUE, Hirofumi, Tokyo 105-7325 (JP)
(74) Representative: Strehl & Partner mbB
(86) International application number: PCT/JP2023/039354
(87) International publication number: WO 2024/101231

(57) **Abstract**

A secondary battery includes a plurality of positive electrodes provided with a positive electrode current collector and a positive electrode mixture layer including a positive electrode active material, which is disposed on the positive electrode current collector; a plurality of negative electrodes provided with a negative electrode current collector and a negative electrode mixture layer including a negative electrode active material, which is disposed on the negative electrode current collector; and a packaging material that accommodates the positive electrodes and the negative electrodes, the secondary battery has a structure formed by laminating the positive electrodes and the negative electrodes in a thickness direction, and the positive electrode mixture layer includes a fibrous carbon, and in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.

## Description

### Technical Field

The present disclosure relates to a secondary battery, a positive electrode and a composition for a positive electrode mixture layer.

### Background Art

Secondary batteries are widely used in electronic devices such as notebook PCs, mobile phones, smartphones, and tablet PCs due to their characteristics of small size, light weight, and high voltage. In recent years, due to environmental issues, secondary batteries such as lithium-based secondary batteries have become popular in electric vehicles (EVs) that run only on batteries, hybrid electric vehicles (HEVs) that combine a gasoline engine and battery, or the like.

Active materials that are expected to be used in the future are positive electrode active materials that have a high proportion of nickel among so-called ternary compounds or are olivine-type phosphates, and negative electrode active materials that are silicon. The positive electrode active materials are each represented by the compositional formula of Liₐ(NiₓMn_{y}Co_{z})O₂ (0≦a≦1, x+y+z=1) or LiₐMPO₄ (0≦a≦1, M is one or more selected from Fe, Co, Mn, Ni, or Cu).

There is a disadvantage to use these positive electrode active materials. This is because it is difficult to achieve both cycle characteristics and rate characteristics compared to conventional active materials such as LiₐCoO₂ and Liₐ(Ni_{1/3}Mn_{1/3}Co_{1/3})O₂ (0≦a≦1).

As an example of attempts to solve such a problem, it is disclosed that a positive electrode for a lithium ion secondary battery includes carbon black composites, in which fibrous carbon and carbon black are connected and a content of an ash specified by JIS K 1469 is 1.0% by mass or less, and olivine-type lithium iron phosphate (for example, see Patent Document 1).

### Citation List

### Patent Document

[Patent Document 1] Japanese Patent Application Laid-Open (JP-A) No. 2001-108889

### SUMMARY OF INVENTION

### Technical Problem

Patent Document 1 does not consider a method for improving rate characteristics and cycle characteristics of a secondary battery having a structure in which a plurality of positive electrodes and negative electrodes are laminated in the thickness direction, for example, a laminate type secondary battery.

The present disclosure has been made in view of the above-mentioned conventional circumstances, and the object of the present disclosure is to provide a secondary battery having a structure in which a plurality of positive electrodes and negative electrodes are laminated in the thickness direction and being excellent in rate characteristics and cycle characteristics, and a positive electrode and a composition for a positive electrode mixture layer capable of manufacturing a secondary battery having a structure in which a plurality of positive electrodes and negative electrodes are laminated in the thickness direction and being excellent in rate characteristics and cycle characteristics.

### Solution to Problem

The specific means to solve the above problems include the following aspects.
<1> A secondary battery comprising: a plurality of positive electrodes provided with a positive electrode current collector and a positive electrode mixture layer including a positive electrode active material, which is disposed on the positive electrode current collector; a plurality of negative electrodes provided with a negative electrode current collector and a negative electrode mixture layer including a negative electrode active material, which is disposed on the negative electrode current collector; and a packaging material that accommodates the positive electrodes and the negative electrodes,
   wherein the secondary battery has a structure formed by laminating the positive electrodes and the negative electrodes in a thickness direction, and
   wherein the positive electrode mixture layer includes a fibrous carbon, and in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.
<2> The secondary battery according to <1>, wherein the σ/A is 0.30 (°C/Ah) or less when the secondary battery is discharged from the fully charged state to the discharge cut-off voltage with a current of 5C.
<3> The secondary battery according to <1> or <2>, wherein the σ/A is 0.25 (°C/Ah) or less when the secondary battery is charged from a fully discharged state to a charge cut-off voltage with a current of 5C.
<4> The secondary battery according to any one of <1> to <3>, wherein an average electrode area per positive electrode is from 20 cm² to 10,000 cm².
<5> The secondary battery according to any one of <1> to <4>, wherein the secondary battery is a laminate type.
<6> The secondary battery according to <5>, wherein a number of layers of each of the positive electrodes and the negative electrodes is 4 or more.
<7> The secondary battery according to any one of <1> to <4>, wherein the secondary battery is a winding type.
<8> The secondary battery according to <7>, wherein a number of winding is 4 or more.
<9> The secondary battery according to any one of <1> to <8>, wherein the positive electrode mixture layer further includes carbon black.
<10> The secondary battery according to any one of <1> to <9>, wherein a thickness of the positive electrode mixture layer and a thickness of the negative electrode mixture layer are each independently 30 µm or more.
<11> The secondary battery according to any one of <1> to <10>, wherein a density of the positive electrode mixture layer is 3.0 g/cm³ or more, and a density of the negative electrode mixture layer is 1.3 g/cm³ or more.
<12> The secondary battery according to any one of <1> to <11>, wherein a mass loading of the positive electrode mixture layer is 10.0 mg/cm² or more, and a mass loading of the negative electrode mixture layer is 5.0 mg/cm² or more.
<13> The secondary battery according to any one of <1> to <12>, wherein the positive electrode active material includes at least one selected from LiNiₓMn_{y}Co_{z}Al_{w}O₂, wherein each of x, y, z, w≥0 and x+y+z+w=1, LiMPO₄, wherein M is one or more selected from Fe, Co, Mn or Ni, or LiMnₐNi_{b}O₄, wherein each of a, b≥0 and a+b=2.
<14> The secondary battery according to any one of <1> to <13>, wherein the positive electrode active material includes LiNiₓMn_{y}Co_{z}Al_{w}O₂, wherein each of x, y, z, w≥0 and x+y+z+w=1.
<15> The secondary battery according to any one of <1> to <14>, wherein the positive electrode active material includes LiMPO₄, wherein M is one or more selected from Fe, Co, Mn or Ni.
<16> The secondary battery according to <15>, wherein a density of the positive electrode mixture layer is 2.0 g/cm³ or more, and a density of the negative electrode mixture layer is 1.3 g/cm³ or more.
<17> The secondary battery according to any one of <1> to <16>, wherein the negative electrode active material includes at least one selected from Si, SiOₓ, wherein 0<x≤2, soft carbon, hard carbon, graphite, composite of silicon and carbon, Li₄Ti₅O₁₂, or metal Li.
<18> The secondary battery according to any one of <1> to <17>, wherein the negative electrode active material includes graphite.
<19> A positive electrode comprising a positive electrode current collector and a positive electrode mixture layer including a positive electrode active material, which is disposed on the positive electrode current collector,
   wherein the positive electrode mixture layer includes a fibrous carbon, and
   wherein, when forming a secondary battery provided with a plurality of the positive electrodes, a plurality of negative electrodes, and a packaging material that accommodates the positive electrodes and the negative electrodes in which the secondary battery has a structure formed by laminating the positive electrodes and the negative electrodes in a thickness direction, in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.
<20> A composition for a positive electrode mixture layer used for formation of a positive electrode mixture layer including a positive electrode active material,
   wherein the composition for a positive electrode mixture layer includes a fibrous carbon, and
   wherein, when forming a secondary battery provided with a plurality of the positive electrodes provided with a positive electrode current collector and a positive electrode mixture layer formed from the composition for a positive electrode mixture layer, which is disposed on the positive electrode current collector, a plurality of negative electrodes, and a packaging material that accommodates the positive electrodes and the negative electrodes in which the secondary battery has a structure formed by laminating the positive electrodes and the negative electrodes in a thickness direction, in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.

### Advantageous Effects of Invention

According to the present disclosure, a secondary battery having a structure in which a plurality of positive electrodes and negative electrodes are laminated in the thickness direction and being excellent in rate characteristics and cycle characteristics, and a positive electrode and a composition for a positive electrode mixture layer capable of manufacturing a secondary battery having a structure in which a plurality of positive electrodes and negative electrodes are laminated in the thickness direction and being excellent in rate characteristics and cycle characteristics can be provided.

### BRIEF DESCRIPTION OF DRAWINGS

FIG. 1 is a cross-sectional view of a laminate type secondary battery in the thickness direction.
FIG. 2 is a perspective view of the laminate type secondary battery.
FIG. 3 is a perspective view of positive electrodes, negative electrodes, and separators accommodated in a packaging material of the laminate type secondary battery.
FIG. 4 is a graph showing the measurement results of values of the initial DCR in Example 1 and Comparative Example 1.
FIG. 5 is a graph showing the DCR change rate when the mass loading of positive electrode is 17.0 mg/cm² in Example 1 and Comparative Example 1.
FIG. 6 is a graph showing the relationship between the current value and the charge capacity ratio when the mass loading of positive electrode is 17.0 mg/cm² in Example 1 and Comparative Example 1.
FIG. 7 is a graph showing the relationship between the current value and the charge capacity ratio when the mass loading of positive electrode is 24.5 mg/cm² in Example 1 and Comparative Example 1.
FIG. 8 is a graph showing the discharge capacity retention rate when a high rate charging and discharging test was conducted in Example 2 and Comparative Example 2.
FIG. 9 is a graph showing the ratio of discharge capacity at 5C charging and discharging in Example 2 and Comparative Example 2, when the discharge capacity at 0.2C charging and discharging is taken as 100%.
FIG. 10 is a graph showing changes in the voltage curve as the cycle progresses in Comparative Example 2.
FIG. 11 is a graph showing changes in the voltage curve as the cycle progresses in Example 2.
FIG. 12 is a graph showing voltage curves during charging and discharging after 400 cycles of high rate charging and discharging tests in Example 2 and Comparative Example 2.

### DESCRIPTION OF EMBODIMENTS

Hereinafter, modes for carrying out the present disclosure will be described in detail. However, the present disclosure is not limited to the following embodiments. In the following embodiments, the constituent elements (including element steps and the like) are not essential unless otherwise specified. The same applies to numerical values and ranges thereof, and they do not limit the present disclosure.

In the present disclosure, the term "step" includes, in addition to steps independent of other steps, such steps as long as the purpose of the step is achieved even if it cannot be clearly distinguished from other steps.

In the present disclosure, those numerical ranges that are expressed with "to" each denote a range that includes the numerical values stated before and after "to" as the minimum value and the maximum value, respectively.

In a set of numerical ranges that are stated stepwise in the present disclosure, the upper limit value or the lower limit value of a numerical range may be replaced with the upper limit value or the lower limit value of other numerical range. Further, in a numerical range stated in the present disclosure the upper limit value or the lower limit value of the numerical range may be replaced with a value indicated in Examples.

In the present disclosure, each component may include plural kinds of substances that correspond to the component. When there are plural kinds of substances that correspond to a component in a composition, the indicated content ratio or content of the component means, unless otherwise specified, the total content ratio or content of the plural kinds of substances existing in the composition.

In the present disclosure, each component may include plural kinds of particles that correspond to the component. When there are plural kinds of particles that correspond to a component in a composition, the indicated particle size of the component means, unless otherwise specified, a value determined for a mixture of the plural kinds of particles existing in the composition.

In the present disclosure, the term "film" or "layer" includes, when a region where the layer or the film is present is observed, in addition to the case where it is formed in an entity of the region, the case where it is formed in only a part of the region.

In the present disclosure, the term "laminated" refers to stacking layers, two or more layers may be combined, and two or more layers may be removable.

In the present disclosure, when specific examples of secondary batteries are described with reference to the drawing, the present disclosure is not limited to the form shown in the drawing. Furthermore, the sizes of the members in each figure are conceptual, and the relative size relationships between the members are not limited thereto.

### [Secondary battery]

A secondary battery of the present disclosure includes a plurality of positive electrodes provided with a positive electrode current collector and a positive electrode mixture layer including a positive electrode active material, which is disposed on the positive electrode current collector; a plurality of negative electrodes provided with a negative electrode current collector and a negative electrode mixture layer including a negative electrode active material, which is disposed on the negative electrode current collector; and a packaging material that accommodates the positive electrodes and the negative electrodes, the secondary battery has a structure formed by laminating the positive electrodes and the negative electrodes in a thickness direction, and the positive electrode mixture layer includes a fibrous carbon, and in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.

The secondary battery of the present disclosure has a structure in which a plurality of positive electrodes and negative electrodes are laminated in the thickness direction, so that it is possible to measure a temperature rise at temperature measurement points on the packaging material, and it is possible to evaluate the standard deviation of temperature rise, which is the variability in temperature rise at a plurality of temperature measurement points. Furthermore, by adopting a positive electrode mixture layer including a fibrous carbon, it is easy to adjust σ/A to 0.35 (°C/Ah) or less during high rate discharging, and it is presumed that by adjusting σ/A to 0.35 (°C/Ah) or less, it becomes easier for the current to flow uniformly, the increase in DC resistance after cycling is reduced, and the cycle characteristics of the secondary battery are improved. Furthermore, by adjusting σ/A to 0.35 (°C/Ah) or less during high rate discharging, local temperature increases are suppressed, which is related to the fact that gas generation, decomposition of the electrolyte, decomposition of the positive electrode active material or the like is suppressed. As a result, it is presumed that the capacity retention rate in high rate charging and discharging with respect to low rate charging and discharging becomes high (excellent rate characteristics).

In the present disclosure, a "fully charged state" in the case of a secondary battery is a state after the battery is charged to a cut-off voltage of 4.2V or more at 0.2C.

In the present disclosure, a "fully discharged state" in the case of a secondary battery is a state after the battery is discharged to a cut-off voltage of 2.8V or less at 0.2C.

As a general example, the charge cut-off voltage is set to 4.2V or more, and the discharge cut-off voltage is set to 2.8V or less.

The secondary battery may have a structure in which a plurality of positive electrodes and negative electrodes accommodated in the packaging material are laminated in the thickness direction, and may be a laminate type secondary battery, or may be a winding type secondary battery. A winding type secondary battery may be, for example, a cylindrical type secondary battery in which an electrode pair obtained by winding a laminate formed by laminating positive electrodes and negative electrodes through separators, and an electrolyte are enclosed in a cylindrical exterior body, or may be a cylindrical type secondary battery in which a cell obtained by winding a laminate formed by laminating positive electrode and negative electrodes through solid electrolytes are enclosed in a cylindrical exterior body.

The secondary battery may be a battery in which a laminate formed by laminating positive electrodes and negative electrodes through separators, and an electrolyte are accommodated in a packaging material, or may be a battery in which a laminate formed by laminating positive electrodes and negative electrodes through solid electrolytes is accommodated in a packaging material.

The number of layers of each of the positive electrodes and negative electrodes may be two or more, three or more, or four or more. In the present disclosure, by laminating the positive electrodes and negative electrodes, it is possible to measure the temperature rise at the temperature measurement points on the packaging material, and by setting the standard deviation of the temperature rise within an appropriate range, a secondary battery with rate characteristics and cycle characteristics can be obtained.

The upper limit of the number of layers of each of the positive electrodes and negative electrodes is not particularly limited, and may be, for example, 100 or less, or 50 or less.

In the case of a winding type secondary battery, the above number of layers means the number of winding.

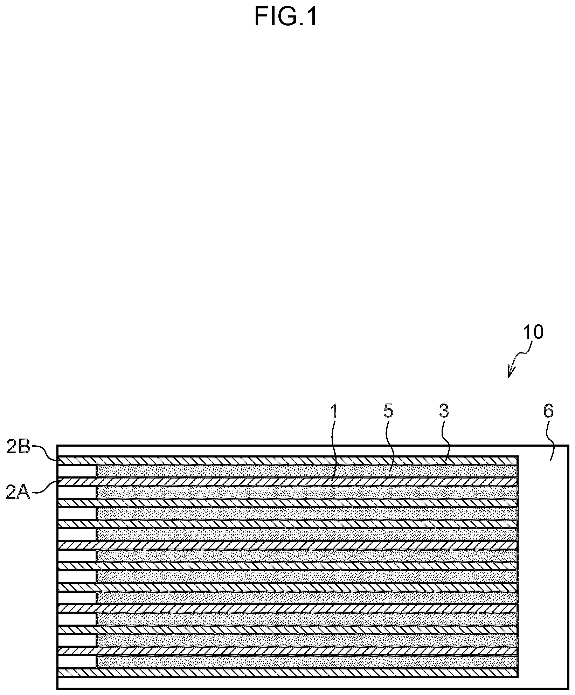

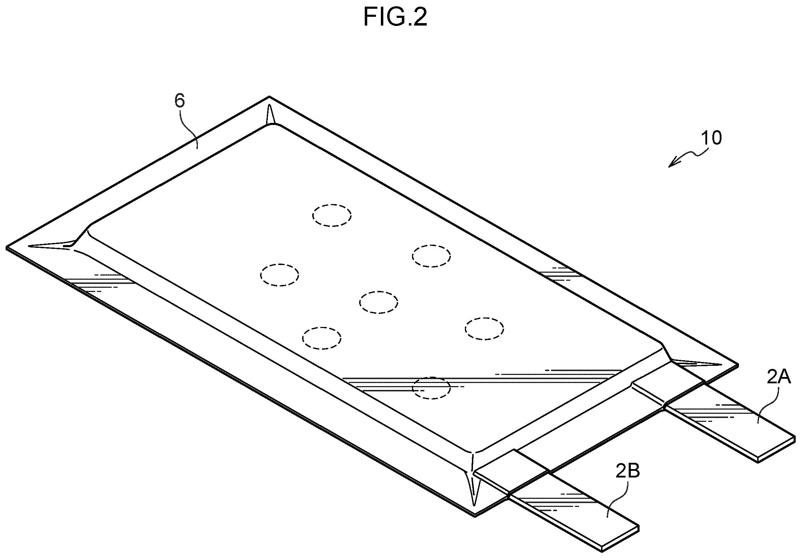

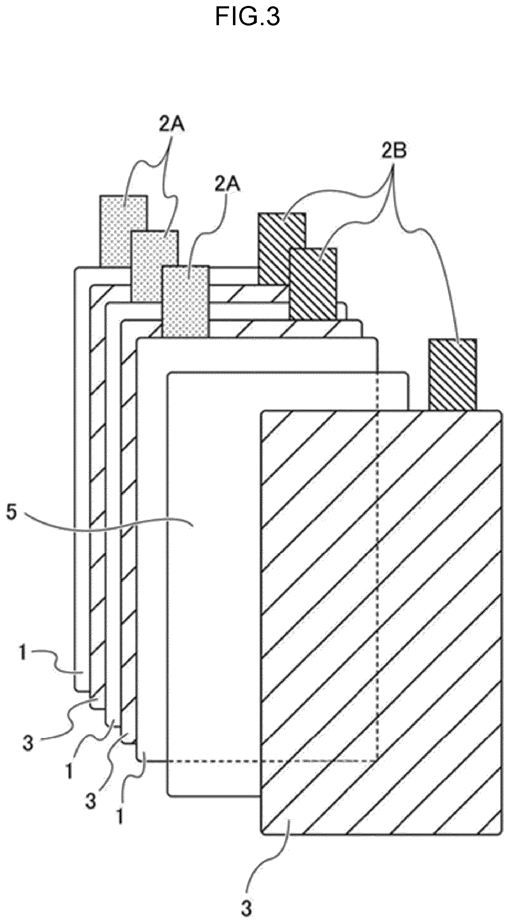

A example of a laminate type secondary battery is shown in FIGs. 1 to 3. FIG. 1 is a cross-sectional view of the laminate type secondary battery in the thickness direction, FIG. 2 is a perspective view of the laminate type secondary battery, and FIG. 3 is a perspective view of positive electrodes, negative electrodes, and separators accommodated in a packaging material of the laminate type secondary battery.

In FIG. 1, in the secondary battery 10, a laminate formed by laminating positive electrodes 1 and negative electrodes 3 through separators 5 is accommodated in a packaging material 6. Further, a positive electrode tab 2A and a negative electrode tab 2B extend to the outside of the exterior body 6. Although FIG. 1 illustrates a secondary battery in which the number of layers of negative electrodes is 6 and the number of layers of positive electrodes is 5, the numbers of layers of each of negative electrodes and positive electrodes are not limited to these in the present disclosure.

FIG. 3 shows a configuration in which positive electrodes 1 and negative electrodes 3 are alternately disposed in the thickness direction. Furthermore, a separator 5 is disposed between the positive electrode 1 and the negative electrode 3. The plurality of positive electrodes 1 and negative electrodes 3 are disposed such that when the respective members are laminated, the plurality of positive electrode tabs 2A overlap with each other, and the plurality of negative electrode tabs 2B overlap with each other. The positive electrodes 1, the negative electrodes 3, and the separators 5 disposed in such a positional relationship are accommodated in the packaging material 6, and after the electrolytic solution is accommodated in the packaging material 6, the opening is sealed by heat fusion or the like. A laminate type secondary battery 10 as shown in FIG. 2 is obtained.

The standard deviation of the temperature rise at the temperature measurement points on the packaging material can be determined, for example, as follows. First, the secondary battery is charged at a constant current with a charge cut-off voltage of 4.2V and a current of 0.2C, and then discharged at constant current with a discharge cut-off voltage of 2.5V and a current of 5C. During this constant current discharging, the temperature at seven points on the packaging material is measured. For example, when measuring temperature using the laminate type secondary battery 10 shown in FIG. 2, it is sufficient to measure the temperature in seven areas indicated by dotted circles. At this time, from the viewpoint of grasping temperature variability between measurement points, it is desirable that the distance between adjacent measurement points be 10 mm or more. Temperature measurement during charging is performed by constant current discharging at a current of 0.2C and with a discharge cut-off voltage of 2.5V, and then constant current charging at a current of 5C and with a charge cut-off voltage of 4.2V.

For example, during constant current charging and constant current discharging, the temperature is measured in seven regions, and the temperature rise range during charging (maximum temperature - minimum temperature) and the temperature rise range during discharging (maximum temperature - minimum temperature) are determined. Then, the standard deviation σ of the temperature rise during high rate discharging can be determined from each measurement result of the temperature rise range during discharging. Similarly, the standard deviation σ of the temperature rise during high rate charging can be determined from each measurement result of the temperature rise range during charging.

In a case of a standard deviation of a temperature rise at temperature measurement points on the packaging material being σ (°C) and a rated capacity of the battery being A (Ah), σ/A is 0.35 (°C/Ah) or less when the secondary battery is discharged with a current of 5C, and from the viewpoint of rate characteristics and cycle characteristics, σ/A is preferably 0.33 (°C/Ah) or less, more preferably 0.32 (°C/Ah) or less and still more preferably 0.30 (°C/Ah) or less.

The lower limit of the standard deviation of a temperature rise during the above discharge is not particularly limited and, for example, σ/A may be 0.10 (°C/Ah) or more.

From the viewpoint of rate characteristics and cycle characteristics, σ/A at temperature measurement points on the packaging material is preferably less than 0.28 (°C/Ah), more preferably 0.25 (°C/Ah) or less, and still more preferably 0.20 (°C/Ah) or less when the secondary battery is charged with a current of 5C.

The lower limit of the standard deviation of a temperature rise during the above charge is not particularly limited and, for example, σ/A may be 0.05 (°C/Ah) or more.

The types of secondary batteries are not particularly limited, and examples thereof include lithium-based secondary batteries, sodium-based secondary batteries, potassium-based secondary batteries, magnesium-based secondary batteries, aluminum-based secondary batteries, and the like. Among these, lithium-based secondary batteries that can achieve high energy density and high voltage, and sodium-based secondary batteries that can reduce costs are preferred.

Although a lithium-based secondary battery will be described below as an example, the present invention is not limited thereto.

### [Positive electrode]

The secondary battery includes a plurality of positive electrodes provided with a positive electrode current collector and a positive electrode mixture layer including a positive electrode active material, which is disposed on the positive electrode current collector.

The material of the positive electrode current collector is not particularly limited as long as it does not oxidize and dissolve at high potential and has electron conductivity, and can be selected from aluminum, copper, nickel, titanium, stainless steel, or the like. The state of the positive electrode current collector is not particularly limited, and can be selected from foil, perforated foil, mesh, or the like.

As an example, an aluminum foil is used as the positive electrode current collector.

As described below, a composition for a positive electrode mixture layer containing a positive electrode active material and fibrous carbon, and further containing carbon black, a binder, a solvent, or the like as necessary, is applied onto the positive electrode current collector, and the applied slurry is dried, and then pressed to form a positive electrode mixture layer on the positive electrode current collector.

From the viewpoint of energy density and safety, a thickness of the positive electrode mixture layer may be 30 µm or more, may be from 50 µm to 70 µm, or may be from 70 µm to 100 µm.

From the viewpoint of energy density and safety, a density of the positive electrode mixture layer may be 2.0 g/cm³ or more, may be 3.0 g/cm³ or more, or may be from 3.0 g/cm³ to 4.0 g/cm³.

From the viewpoint of energy density and safety, a mass loading of the positive electrode mixture layer may be 10.0 mg/cm² or more, or may be from 10.0 mg/cm² to 30.0 mg/cm².

An average electrode area per sheet (each of average positive electrode area and average negative electrode area) may be from 20 cm² to 10000 cm², or may be from 300 cm² to 10000 cm².

### (Positive electrode Active Material)

The positive electrode mixture layer includes a positive electrode active material. The positive electrode active material can be appropriately selected depending on the type of secondary batteries, and examples thereof includes a compound including at least one of lithium, sodium, potassium, magnesium, and aluminum. Examples of the positive electrode active material include oxides including nickel, phosphates having an olivine structure, and the like. When the secondary battery is a lithium-based secondary battery, examples of the positive electrode active material includes LiNiₓMn_{y}Co_{z}Al_{w}O₂, (each of x, y, z, w≧0, x+y+z+w=1), LiMPO₄ (M is one or more selected from Fe, Co, Mn or Ni), LiMnₐNi_{b}O₄ (each of a, b≧0, a+b=2), and the like.

It is preferable that the positive electrode active material includes LiNiₓMn_{y}Co_{z}Al_{w}O₂ (each of x, y, z, w≥0 and x+y+z+w=1) or includes LiMPO₄ (M is one or more selected from Fe, Co, Mn or Ni).

As LiNiₓMn_{y}Co_{z}Al_{w}O₂ (each of x, y, z, w≧0, x+y+z+w=1), it is preferable that the proportion of nickel is relatively high, for example, x≧0.5 or more, and Li(NiₓMn_{y}Co_{z})O₂ (x≧0 .5, y≦0.3, z≦0.3, x+y+z=1) is more preferable. Examples of the positive electrode active material represented by Li(NiₓMn_{y}Co_{z})O₂ (x≧0 .5, y≦0.3, z≦0.3, x+y+z=1) includes Li(Ni_{0.8}Mn_{0.1}Co_{0.1})O₂, Li(Ni_{0.7}Mn_{0.2}Co_{0.1})O₂, Li(Ni_{0.7}Mn_{0.1}Co_{0.2})O₂, Li(Ni_{0.6}Mn_{0.2}Co_{0.2})O₂, Li(Ni_{0.5}Mn_{0.3}Co_{0.2})O₂ and Li(Ni_{0.5}Mn_{0.2}Co_{0.3})O₂.

Examples of the positive electrode active material represented by LiMPO₄ (M is one or more selected from Fe, Co, Mn, or Ni) include LiFePO₄, LiFe_{0.5}Mn_{0.5}PO₄, LiFe_{0.3}Mn_{0.7}PO₄, LiCoPO₄, and LiCo_{0.5}Mn_{0.5}PO₄.

At least a portion of the surface of the positive electrode active material may be coated with amorphous carbon. Coating methods with amorphous carbon include known methods such as heating the positive electrode active material and flowing hydrocarbon gas thereto to perform CVD; and carbonizing a carbon precursor by mixing the carbon precursor and the positive electrode active material and performing heat treatment with the mixture in which the carbon precursor is attached to at least a portion of the surface of the positive electrode active material.

From the viewpoint of obtaining a sufficient capacity ratio, a 50% particle diameter in the number-based cumulative particle size distribution, (Dₙ₅₀) of the primary particles of the positive electrode active material is preferably 0.01 µm or more, more preferably 0.02 µm or more, and still more preferably 0.03 µm or more.

From the viewpoint of obtaining sufficient rate characteristics, the 50% particle diameter in the number-based cumulative particle size distribution, (Dₙ₅₀) of the primary particles of the positive electrode active material is preferably 2.0 µm or less, more preferably 1.7 µm or less, and still more preferably 1.5 µm or less.

The 50% particle diameter (Dₙ₅₀) of the primary particles of the positive electrode active material in the number-based cumulative particle size distribution can be determined by selecting 100 arbitrary primary particles of the positive electrode active material from the SEM photograph and cross-sectional SEM photograph of the electrode, and taking the arithmetic average of the measurement results of the maximum length of the particles using image recognition software.

From the viewpoint of excellent handling of powder and easily increasing electrode density, a 50% particle diameter in the number-based cumulative particle size distribution, (Dₙ₅₀) of the secondary particles of the positive electrode active material is preferably 0.5 µm or more, more preferably 1.0 µm or more, and still more preferably 2.0 µm or more.

From the viewpoint of obtaining sufficient rate characteristics and preventing abnormal unevenness from occurring during electrode coating, the 50% particle diameter in the number-based cumulative particle size distribution, (Dₙ₅₀) of the secondary particles of the positive electrode active material is preferably 30.0 µm or less, more preferably 25.0 µm or less, and still more preferably 20.0 µm or less.

The 50% particle diameter in the number-based cumulative particle size distribution, (Dₙ₅₀) of the secondary particles of the positive electrode active material can be determined by selecting 100 arbitrary secondary particles of the positive electrode active material from the SEM photograph and cross-sectional SEM photograph of the electrode, and taking the arithmetic average of the measurement results of the maximum length of the particles using image recognition software.

In the present disclosure, the primary particles of the positive electrode active material refer to particles that can be recognized as one particle in a SEM photograph of 3000 times to 30000 times.

In this specification, the secondary particles of the positive electrode active material are lumps formed by an aggregation of primary particles. The secondary particles of the positive electrode active material can be confirmed from the SEM photograph.

In this specification, as to the positive electrode active material, when being simply called "particles", they refer to primary particles or secondary particles.

In the positive electrode mixture layer, from the viewpoint of positive electrode capacity, a content rate of the positive electrode active material is preferably 90.0% by mass or more, more preferably 93.0% by mass or more, and still more preferably 95.0% by mass or more.

In the positive electrode mixture layer, from the viewpoint of ensuring the amount of other components, the content rate of the positive electrode material is preferably 98.0% by mass or less, more preferably 97.0% by mass or less, and still more preferably 96.5% by mass or less.

### (Fibrous Carbon)

The positive electrode mixture layer includes a fibrous carbon. Examples of the fibrous carbon include carbon fibers; vapor grown carbon fibers; carbon nanotubes such as single-walled carbon nanotubes (SWCNTs), and multi-walled carbon nanotubes (MWCNTs); and carbon nanofibers. Vapor grown carbon fibers are preferred from the viewpoints of excellent dispersibility, low electrode resistance, and ability to suitably suppress variability in temperature rise during high rate discharging.

Furthermore, the vapor grown carbon fibers may be combined with other fibrous carbon, such as carbon nanotubes such as single-walled carbon nanotubes (SWCNTs) and multi-walled carbon nanotubes (MWCNTs).

The positive electrode mixture layer may include one type of fibrous carbon, or may include two or more types of fibrous carbon.

From the viewpoint of obtaining excellent cycle characteristics and rate characteristics, an average fiber diameter of the fibrous carbon is preferably from 1 nm to 200 nm, more preferably from 100 nm to 200 nm and still more preferably from 120 nm to 180 nm.

The average fiber diameter of the fibrous carbon can be determined from the arithmetic mean of the diameters of 300 arbitrary fibers observed by SEM of the electrode. The diameter of a single fiber can be determined by measuring the width of ten arbitrary points of a certain fiber from a SEM photograph and taking the arithmetic average of the widths.

Herein, the width of the fiber refers to the dimension of the fiber in the direction perpendicular to the longitudinal direction.

From the viewpoint of obtaining excellent cycle characteristics and rate characteristics, an average fiber length of the fibrous carbon is preferably from 1 µm to 20 µm, more preferably from 3 µm to 15 µm and still more preferably from 4 µm to 10 µm.

The average fiber length of the fibrous carbon can be measured as follows. First, the electrode is washed with a solvent, then the powder after removing the binder or the like is dispersed in a dispersion medium, and the spread on aluminum foil or the like after drying is observed with SEM. The average fiber length can be determined by measuring the length of 300 arbitrary fibers along the fiber axis and taking the arithmetic average.

The fibrous carbon preferably includes fibrous carbon having an average fiber diameter of from 100 nm to 200 nm and an average fiber length of from 3 µm to 15 µm, more preferably includes a vapor grown carbon fiber or carbon nanotube having an average fiber diameter of from 100 nm to 200 nm, and an average fiber length of from 3 µm to 15 µm.

Specific examples of the fibrous carbon include VGCF (registered trademark)-X (manufactured by Showa Denko K.K.), VGCF (registered trademark)-H (manufactured by Showa Denko K.K.), and the like.

In the positive electrode mixture layer, from the viewpoint of obtaining excellent cycle characteristics and rate characteristics, a content rate of the fibrous carbon is preferably 0.1% by mass or more, more preferably 0.3% by mass or more, and still more preferably 0.5% by mass or more.

In the positive electrode mixture layer, from the viewpoint of ensuring positive electrode capacity, the content rate of the fibrous carbon is preferably 3.0% by mass or less, more preferably 2.0% by mass or less, and still more preferably 1.0% by mass or less.

In the positive electrode mixture layer, when the fibrous carbon includes a vapor grown carbon fiber and a carbon nanotube such as a single-walled carbon nanotube (SWCNT) and a multi-walled carbon nanotube (MWCNT), a ratio of the vapor grown carbon fiber and carbon nanotube is not particularly limited. From the viewpoint of cycle characteristics in high rate charging and discharging, for example, vapor grown carbon fiber : carbon nanotube may be from 20:1 to 1:1, may be from 10:1 to 1:1, or may be from 5:1 to 2:1.

### (Carbon Black)

The positive electrode mixture layer may further contain carbon black. Carbon black is used as a conductive additive for secondary batteries. Examples of the carbon black include Denka Black (registered trademark, manufactured by Denka Corporation), C-NERGY (registered trademark) Super C45, C65 (manufactured by Imerys Graphite & Carbon), and Ketjen Black (manufactured by Ketjen Black International).

A primary particle size of the carbon black may be from 10 nm to 100 nm. Herein, the term "primary particle" refers to the portion of a bead-like structure called an aggregate, which corresponds to a single bead. When the primary particle size of the carbon black is within this range, it tends to be uniformly dispersed on the surface of the active material. From the viewpoint of improving dispersibility, the primary particle size of carbon black is preferably from 20 nm to 80 nm, and more preferably from 30 nm to 70 nm.

The primary particle diameter of the carbon black can be determined by selecting 100 arbitrary primary particles of carbon black from the SEM photograph and cross-sectional SEM photograph of the electrode, and calculating the arithmetic average of the maximum length measurement results of the particles by image recognition software.

When the positive electrode mixture layer contains carbon black, from the viewpoint of excellent cycle characteristics and rate characteristics, a content rate of the carbon black is preferably 0.2% by mass or more, more preferably 0.6% by mass or more, and still more preferably 1.0% by mass or more.

In the positive electrode mixture layer, from the viewpoint of ensuring the capacity of the positive electrode, the content rate of the carbon black is preferably 6.0% by mass or less, more preferably 4.0% by mass or less, and still more preferably 2.0% by mass or less.

When the positive electrode mixture layer contains carbon black, from the viewpoint of lowering the resistance of the positive electrode mixture layer by combining the two materials, a mass ratio of carbon black and fibrous carbon (carbon black : fibrous carbon) is preferably from 1:5 to 5:1, more preferably from 1:4 to 4:1, and still more preferably from 1:1 to 1:3.

### (Binder)

The positive electrode mixture layer may contain a binder. As the binder, binders used in a positive electrode mixture layer for ordinary lithium ion secondary batteries can be suitably used. Examples of the binder include polyvinylidene fluoride (PVdF) and polytetrafluoroethylene (PTFE).

When the positive electrode mixture layer contains a binder, from the viewpoint of obtaining the function as the binder, a content rate of the binder is preferably 1.0% by mass or more, more preferably 1.5% by mass or more, and still more preferably 2.0% by mass or more.

**In** the positive electrode mixture layer, from the viewpoint of suppressing an increase in the resistance of the positive electrode, the content rate of the binder is preferably 5.0% by mass or less, more preferably 4.5% by mass or less, and still more preferably 4.0% by mass or less.

### (Another Ingredient)

In addition to the above, the positive electrode mixture layer may contain another ingredient such as a dispersant and an additive. For example, it may contain a variety of dispersants for dispersing the positive electrode active material, an agent for surface modification of the positive electrode active material, and the like.

### [Negative electrode]

The secondary battery includes a plurality of negative electrodes provided with a negative electrode current collector and a negative electrode mixture layer including a negative electrode active material, which is disposed on the negative electrode current collector.

The material of the negative electrode current collector is not particularly limited as long as it has electron conductivity, and can be selected from aluminum, copper, nickel, titanium, stainless steel, or the like. The state of the negative electrode current collector is not particularly limited, and can be selected from foil, perforated foil, mesh, or the like.

As an example, a copper foil is used as the negative electrode current collector.

As described below, a composition for a negative electrode mixture layer containing a negative electrode active material, and further containing a conductive additive, a binder, a solvent, or the like as necessary, is applied onto the negative electrode current collector, and the applied slurry is dried, and then pressed to form a negative electrode mixture layer on the negative electrode current collector.

From the viewpoint of energy density and safety, a thickness of the negative electrode mixture layer may be 30 µm or more, may be from 50 µm to 100 µm, or may be from 100 µm to 150 µm.

From the viewpoint of energy density and safety, a density of the negative electrode mixture layer may be 1.3 g/cm³ or more, or may be from 1.5 g/cm³ to 2.0 g/cm³.

From the viewpoint of energy density and safety, a mass loading of the negative electrode mixture layer may be 5.0 mg/cm² or more, or may be from 10.0 mg/cm² to 20.0 mg/cm².

### (Negative electrode Active Material)

The negative electrode mixture layer contains a negative electrode active material. Examples of the negative electrode active material include Si, SiOₓ, (0<x≤2), soft carbon, hard carbon, graphite, composite of silicon and carbon, Li₄Ti₅O₁₂, or metal Li. Among these, it is preferable that the negative electrode active material contains graphite. Furthermore, at least a portion of the surface of the negative electrode active material may be coated with amorphous carbon.

### (Conductive Additive)

The negative electrode mixture layer may contain a conductive additive. Examples of the conductive additive include carbon materials such as the aforementioned fibrous carbon, carbon black, and graphene.

### (Binder)

The negative electrode mixture layer may contain a binder. As examples of the binder, PVdF, PTFE or the like can be used similar to the positive electrode mixture layer, or styrene butadiene rubber (SBR), carboxymethyl cellulose (CMC), polyacrylic acid (PAA), or the like can be used.

### (Packaging Material)

A packaging material that accommodates the positive electrodes and the negative electrodes is not limited as long as it can accommodate the positive electrodes and the negative electrodes, a separator and an electrolyte or a solid electrolyte or the like as required. Examples of the packaging material include commercially available battery packs, 18650 type cylindrical cells, and those packed with an aluminum packaging material, and the packaging material can be freely designed and used.

### (Separator)

The secondary battery may include a separator between the positive electrode and the negative electrode. The separator can be freely selected from those that can be used in general secondary batteries, and examples thereof include microporous films made of polyethylene or polypropylene. A separator in which particles of SiO₂, Al₂O₃, or the like are mixed as a filler, a separator in which these particles are attached to the surface, or the like can be also used.

### (Electrolytic Solution)

In the secondary battery, an electrolytic solution may be accommodated in the packaging material. The electrolytic solution is not particularly limited, and electrolytic solutions that can be used in ordinary secondary batteries can be suitably used. For example, an organic solvent in which a lithium salt with 0.5 mol/L to 2.0 mol/L is dissolved can be used.

Examples of the lithium salt include LiPF₆, LiBF₄, LiClO₄, LiAsF₆, and LiFSI.

Examples of the organic solvent include ethylene carbonate (EC), ethylmethyl carbonate (EMC), dimethyl carbonate (DMC), diethyl carbonate (DEC), and propylene carbonate (PC). The organic solvents listed here and others may be appropriately selected and mixed for use. Furthermore, examples of additives for the electrolytic solution include vinylene carbonate (VC), propane sultone (PS), and fluoroethylene carbonate (FEC). When using an additive, a content rate of the additive is preferably from 0.01% by mass to 20% by mass, more preferably from 0.1% by mass to 10% by mass, and still more preferably from 0.5% by mass to 5% by mass, with respect to 100% by mass of the organic solvent.

### (Ionic Liquid)

An ionic liquid may be used as an electrolyte, or an ionic liquid may be used in combination with the above-mentioned organic solvent. The ionic liquid is not particularly limited, and examples thereof include a combination of a cation such as imidazolium cation, pyrrolidinium cation, piperidinium cation, or an ammonium cation, and an anion such as bis(trifluoromethane)sulfonimide anion.

### (Solid Electrolyte)

A solid electrolyte may be used as an electrolyte. When a solid electrolyte is used, a separator becomes unnecessary, and a battery (for example, an all-solid-state lithium ion secondary battery) can be formed in which the solid electrolyte is sandwiched with a positive electrode and a negative electrode.

Examples of the solid electrolyte include polymer electrolytes, inorganic solid electrolytes, and the like. The polymer electrolyte is not particularly limited, and examples thereof include a polymer such as polyethylene oxide impregnated with the above lithium salt. The inorganic solid electrolyte is not particularly limited, and examples thereof include Li₁₃Ti_{1.7}Al_{0.3}(PO₄)₃, Li₂S-P₂S₅, and the like.

The positive electrode included in the secondary battery of the present disclosure is obtained by applying a composition for a positive electrode mixture layer including a positive electrode active material and a fibrous carbon, and carbon black, a binder, a solvent or the like as required on a positive electrode current collector, drying the applied slurry, and then pressing it to form a positive electrode mixture layer on the positive electrode current collector.

### [Composition for Positive electrode Mixture Layer]

A composition for a positive electrode mixture layer of the present disclosure is a composition for a positive electrode mixture layer used for formation of a positive electrode mixture layer including a positive electrode active material, and the composition for a positive electrode mixture layer includes a fibrous carbon. Further, when forming a secondary battery provided with a plurality of the positive electrodes provided with a positive electrode mixture layer formed from the composition for a positive electrode mixture layer, a plurality of negative electrodes, and a packaging material that accommodates the positive electrodes and the negative electrodes in which the secondary battery has a structure formed by laminating the positive electrodes and the negative electrodes in a thickness direction, in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.

As a result, by using composition for a positive electrode mixture layer of the present disclosure, it is possible to produce a secondary battery with excellent rate characteristics and cycle characteristics.

Preferred configurations of the positive electrode active material and fibrous carbon, and carbon black, binder, or the like as required, included in the composition for a positive electrode mixture layer of the present disclosure is similar to the preferred configurations which are explained in the above-mentioned section of the secondary battery of the present disclosure.

The composition for a positive electrode mixture layer may include a solvent. The solvent is not particularly limited and examples thereof include N-methyl-2-pyrrolidone (NMP).

For example, the composition for a positive electrode mixture layer of the present disclosure can be prepared as follows.
(1) The positive electrode active material and fibrous carbon are weighed, and carbon black, binder, or the like is weighed as required, and these are mixed while adding a solvent.
(2) The mixture obtained in (1) above is kneaded while adding a solvent to obtain a composition for a positive electrode mixture layer having an appropriate viscosity.

Further, the positive electrode current collector is coated with the composition for a positive electrode mixture layer using a doctor blade or a coating machine, and the solvent may be dried by disposing the positive electrode current collector coated with the composition for a positive electrode mixture layer on a heating device such as a hot plate. Thereafter, vacuum drying is performed to remove the remaining solvent. A positive electrode is obtained by pressing and molding the product obtained by removing the solvent using a roll press, uniaxial press, or the like.

### [Positive electrode]

A positive electrode of the present disclosure includes a positive electrode current collector and a positive electrode mixture layer including a positive electrode active material, which is disposed on the positive electrode current collector, and the positive electrode mixture layer includes a fibrous carbon. Further, when forming a secondary battery provided with a plurality of the positive electrodes of the present disclosure, a plurality of negative electrodes, and a packaging material that accommodates the positive electrodes and the negative electrodes in which the secondary battery has a structure formed by laminating the positive electrodes and the negative electrodes in a thickness direction, in a case of a standard deviation of a temperature rise at temperature measurement points on the packaging material being σ (°C) and a rated capacity of the battery being A (Ah), σ/A is 0.35 (°C/Ah) or less when the secondary battery is discharged from a full state of charge to a discharge cut-off voltage with a current of 5C. As a result, by using the positive electrode of the present disclosure, it is possible to produce a secondary battery with excellent rate characteristics and cycle characteristics.

For example, the positive electrode of the present disclosure can be prepared by using the composition for a positive electrode mixture layer of the present disclosure.

Each electrode can be laminated and then packed for use. Furthermore, single cells can be connected in series and used as batteries, modules, or the like.

The secondary battery of the present disclosure can be used for a power source for electronic devices such as smartphones, tablet PCs, and mobile information terminals; a power source for electric motors such as power tools, vacuum cleaners, electric bicycles, drones, and electric vehicles; and a storage of electricity obtained from fuel cells, solar power generation, wind power generation, or the like.

Hereinafter, the present disclosure will be specifically explained using Examples, but the scope of the present disclosure is not limited to these Examples.

### [Example 1]

### (Preparation of Positive electrode)

96.5 parts by mass of NMC811 (Li(Ni_{0.8}Mn_{0.1}Co_{0.1})O₂ as positive electrode material, 1.0 parts by mass of carbon black (primary particle Dₙ₅₀: 100 nm), 0.5 parts by mass of fibrous carbon with an average fiber diameter of 150 nm and an average fiber length of 6 µm, and NMP solution containing 2.0 parts by mass of PVdF were weighed and mixed in a kneader. Thereafter, the mixture was mixed in a kneader while appropriately adding NMP to prepare a slurry for positive electrode with adjusted viscosity.

In addition, a 50% particle diameter in the number-based cumulative particle size distribution, (Dₙ₅₀) of the primary particles of positive electrode active material, NMC811 was 0.5 µm, and a 50% particle diameter in the number-based cumulative particle size distribution, (Dₙ₅₀) of the secondary particles was 10.1 µm.

The slurry for positive electrode was applied onto an aluminum foil with a thickness of 20 µm using a roll coater, dried, and then vacuum dried to obtain a positive electrode sheet. By roll pressing, a thickness of the positive electrode mixture layer was adjusted to 53 µm and a density of the positive electrode mixture layer was adjusted to 3.2 g/cm³.

### (Preparation of Negative electrode)

95.7 parts by mass of graphite particles as a negative electrode active material, 1.3 parts by mass of carbon black (primary particle Dₙ₅₀: 50 nm) as a conductive additive, a CMC aqueous solution with a concentration of 2% by mass including 1.5 parts by mass of carboxymethylcellulose (CMC) as a binder, and 1.5 parts by mass of POLYSOL (registered trademark, manufactured by Showa Denko K.K.) were weighed, and mixed using a kneader to obtain a slurry for negative electrode. Graphite particles with a 50% particle diameter in the volume-based cumulative particle size distribution, (Dᵥ₅₀) of 14 µm was used.

The slurry for negative electrode was applied onto a copper foil with a thickness of 20 µm using a roll coater, dried, and then vacuum dried to obtain a negative electrode sheet. By roll pressing, a thickness of the negative electrode mixture layer was adjusted to 88 µm and a density of the negative electrode mixture layer was adjusted to 1.4 g/cm³.

### (Production of Laminated Full Cell)

A laminated full cell for evaluation in Example 1 was produced in the following manner in a glove box maintained in a dry argon gas atmosphere with a dew point of -80°C or less.

The positive electrode sheet and negative electrode sheet obtained in the preparation of positive electrode and the preparation of negative electrode were punched out to obtain a positive electrode and negative electrode having an area of 20 cm². An Al tab was attached to an Al foil of the positive electrode, and a Ni tab was attached to a Cu foil of the negative electrode. A microporous polypropylene membrane as a separator was sandwiched between the negative electrode and positive electrode to obtain a laminated cell provided with a plurality of negative electrodes and a plurality of positive electrodes, and separators each of which was disposed between the negative electrode and the positive electrode. The entire of the laminated cell except for the tabs was wrapped in an aluminum laminate packaging material, and 2890 µL of an electrolyte solution was injected thereinto. Thereafter, an opening was sealed by heat fusion to produce a laminated full cell for evaluation as a secondary battery. The electrolyte solution was prepared by mixing a solvent that is a mixture of ethylene carbonate, ethyl methyl carbonate, and dimethyl carbonate at a volume ratio of 3:5:2 with vinylene carbonate (VC) so that the concentration of vinylene carbonate became 1% by mass and further dissolving LiPF₆ as an electrolyte in thus obtained mixture so that the concentration of LiPF₆ became 1.2 mol/L. Further, the design capacity of the laminated full cell for evaluation was 1000 mAh.

In addition, as shown in Table 1, each of laminated full cells for evaluation with different capacity ratio (negative electrode/positive electrode) and mass loading of the positive electrode mixture layer was produced using laminated cells with different numbers of negative electrodes and positive electrodes.

### [Comparative Example 1]

### (Preparation of Positive electrode)

96.5 parts by mass of NMC811 (Li(Ni_{0.8}Mn_{0.1}Co_{0.1})O₂) which is the same as Example 1 as positive electrode active material, 1.5 parts by mass of the same carbon black used in Example 1, and NMP solution containing 2.0 parts by mass of PVdF were weighed and mixed in a kneader. Thereafter, the mixture was mixed in a kneader while appropriately adding NMP to prepare a positive electrode slurry with adjusted viscosity. A positive electrode sheet was produced in the same manner as in Example 1 using the positive electrode slurry prepared in Comparative Example 1.

### (Production of Laminated Full Cell)

A laminated full cell for evaluation was produced in the same manner as in Example 1 using the positive electrode sheet produced in Comparative Example 1 and the negative electrode sheet produced in Example 1.

In addition, as in Example 1, as shown in Table 1, each of laminated full cells for evaluation with different capacity ratio (negative electrode/positive electrode) and mass loading of the positive electrode mixture layer was produced using laminated cells with different numbers of negative electrodes and positive electrodes.

The produced laminated full cell was subjected to aging treatment.

### (Charging/Discharging Evaluation of Laminated Full Cell)

In the laminated full cell after the above aging (mass loading of positive electrode mixture layer being 17.0 mg/cm², capacity ratio (negative electrode/positive electrode) being 1.1, 8 layers of negative electrodes and 7 layers of positive electrodes), constant current charging was performed with a current of 0.2C and a cut-off voltage of 4.2V. Next, constant current discharging was performed with a current of 5C and a cut-off voltage of 2.5V. During this constant current discharging, the temperature at seven points on the packaging material was measured. Next, constant current discharging was performed with a current of 0.2C and a cut-off voltage of 2.5V. Next, constant current charging was performed with a current of 5 C and a cut-off voltage of 4.2 V. During this constant current charging, the temperature at seven points on the packaging material was measured. The temperature measurement locations were (1) the center, (2) the upper left of the center (lower left tab), (3) the upper right of the center (lower the right tab), (4) the center left, (5) the center right, (6) the lower left of the center, and (7) the lower right of the center on the packaging material in a plan view of the laminated full cell.

The temperature at 7 points on the packaging material during constant current charging and constant current discharging was measured, the temperature rise range during charging (maximum temperature - minimum temperature) and the temperature rise range during discharging (maximum temperature - minimum temperature) at each measurement point were determined, and the standard deviation σ of the temperature rise at the temperature measurement points was determined. Further, σ/A (°C/Ah) was determined as the rated capacity of the battery is A (Ah). The results are shown in Tables 2 and 3.

### (Measurement of Initial DCR)

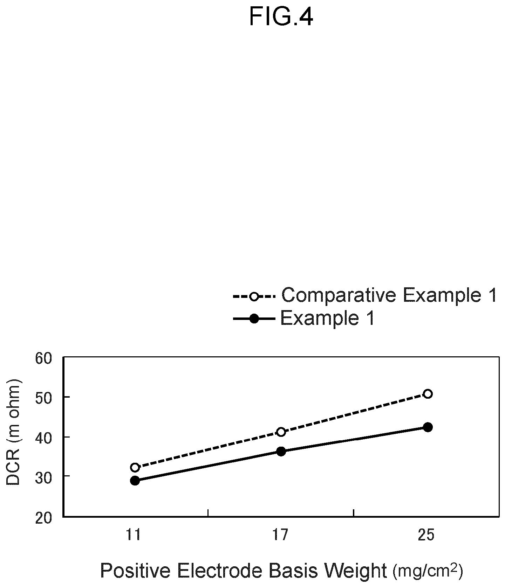

In the laminated full cell after the above aging (mass loading of positive electrode mixture layer being 11.0mg/cm², 17.0 mg/cm² ,and 24.5mg/cm², capacity ratio (negative electrode/positive electrode) being 1.1, 8 layers of negative electrodes and 7 layers of positive electrodes), after performing constant current charging and discharging once at a current of 1C in a thermostatic chamber at 25°C, the battery was brought to a fully charged state, and then the battery was discharged at 0.1C to half the discharge capacity of the first cycle. After resting for 30 minutes, discharging was performed at 1000 mA for 5 seconds. The internal resistance of the battery (DCR at soc = 50%) was determined according to Ohm's law (R = ΔV/1) from the amount of voltage drop at this time. The results are shown in Table 3 and FIG. 4.

### (Evaluation of DCR Change)

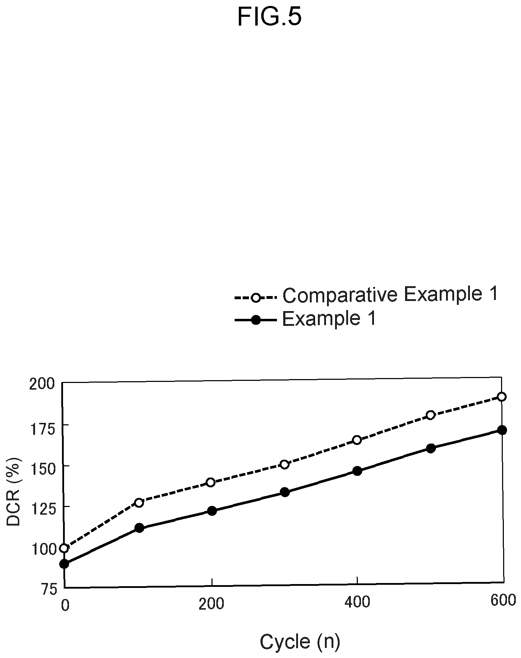

In the laminated full cell after the above initial DCR measurement, DCRs at the 100th, 200th, 300th, 400th, 500th, and 600th cycles were measured in the following manner, and the DCR change (%) in each cycle was determined when the standard (in Figure 5, the value of the initial DCR in Comparative Example 1) was set as 100%.

Specifically, after repeating constant current charge and discharge at a current of 1C in a thermostatic chamber at 25°C a predetermined number of times, the battery was brought to a fully charged state, and then the battery was discharged at 0.1C to half the discharge capacity of the first cycle. After resting for 30 minutes, discharging was performed at 1000 mA for 5 seconds. The internal resistance of the battery (DCR at soc = 50%) was determined as the DCR in each cycle according to Ohm's law (R = ΔV/1) from the amount of voltage drop at this time.

In the cycle, the laminated full cell was charged at a constant current with a current of 1C and a cut-off voltage of 4.2V in a thermostatic chamber at 25°C, and then discharged at a constant current with a current of 1C and a cut-off voltage of 2.8V. Immediately before the DCR measurement in said each cycle, the charging operation to bring the battery to a fully charged state and the discharging operation to bring the soc to 50% were not counted in the number of cycles. After the DCR measurement in each cycle, the charging/discharging operation was restarted from charging at 1 C, and the number of cycles after restarting charging/discharging was added to the previous number of cycles and counted.

The results are shown in Table 3 and Figure 5.

For Example 1, the DCR change (%) shown in Table 3 is the increase rate with respect to the value of the initial DCR in Example 1, and for Comparative Example 1, it is the increase rate with respect to the value of the initial DCR in Comparative Example 1.

### (Evaluation of Rate Characteristics)

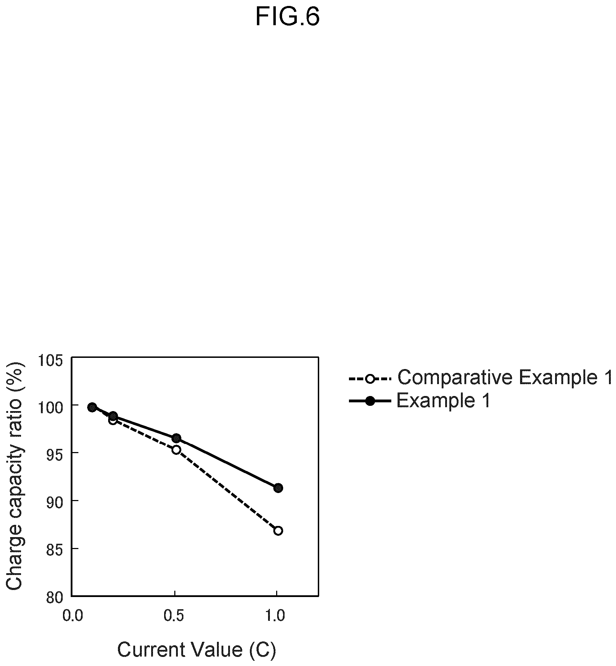

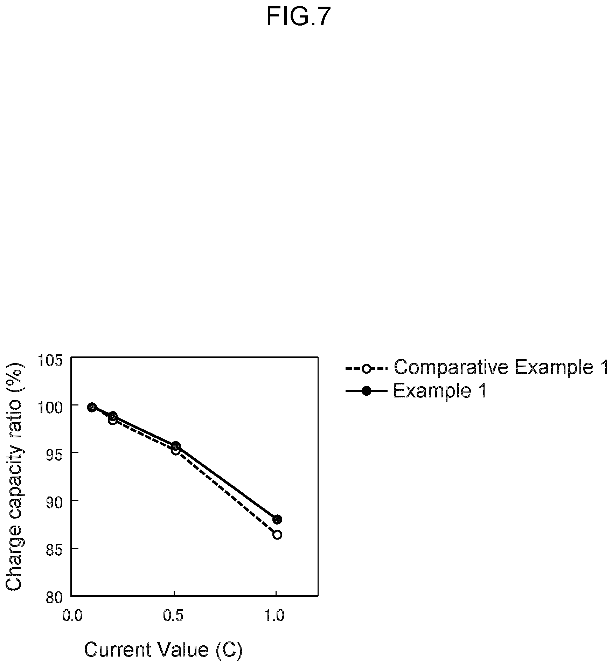

Regarding the laminated full cell after aging with the mass loading of the positive electrode mixture layer of 17.0 mg/cm² or 24.5 mg/cm², changes in charge capacity ratio were evaluated when the current value was changed in the range of 0.1C to 1.0C in a thermostatic chamber at 25°C. Specifically, after performing constant current charging and discharging under the condition of 0.1 C, constant current charging was performed at each rate to determine the charge capacity. Then, the charge capacity ratio (%) at 0.2C, 0.5C, or 1.0C was determined when the charge capacity at 0.1C was taken as 100%. The results are shown in Table 3 and FIGS. 6 and 7. The higher the value of the charge capacity ratio, the better the rate characteristics. Table 3 shows the charge capacity ratio (%) at 1.0C with respect to the charge capacity at 0.1C.

**[Table 1]**

| | Example 1 | | | Comparative example 1 | | |
|---|---|---|---|---|---|---|
| Mass loading of positive electrode mixture layer (mg/cm²) | 11.0 | 17.0 | 24.5 | 11.0 | 17.0 | 24.5 |
| Number of layers of positive electrodes | 10 | 7 | 5 | 10 | 7 | 5 |
| Number of layers of negative electrodes | 11 | 8 | 6 | 11 | 8 | 6 |
| Capacity ratio (negative electrode/positive electrode) | 1.1 | 1.1 | 1.1 | 1.1 | 1.1 | 1.1 |

**[Table 2]**

| | | Temperature rise range (°C) | | | | | | | Average value of temperature rise range |
|---|---|---|---|---|---|---|---|---|---|
| | | (1) | (2) | (3) | (4) | (5) | (6) | (7) | (°C) |
| Example 1 | Discharge | 5.8 | 4.9 | 4.9 | 5.3 | 5.3 | 5.2 | 5.1 | 5.21 |
| | Charge | 4.4 | 4.0 | 3.9 | 4.2 | 4.1 | 3.9 | 3.9 | 4.06 |
| Comparative example 1 | Discharge | 7.4 | 6.2 | 6.4 | 6.7 | 7.0 | 6.6 | 6.8 | 6.73 |
| | Charge | 4.9 | 4.1 | 4.4 | 4.5 | 4.4 | 4.1 | 4.1 | 4.36 |

**[Table 3]**

| | | Average value of temperature rise range (°C) | σ/A (°C/Ah ) | Initial DCR (mQ) | | | Charge capacity ratio (%) | | DCR change (%) |
|---|---|---|---|---|---|---|---|---|---|
| Mass loading of positive electrode mixture layer (mg/cm²) | | 17.0 | | 11. 0 | 17. 0 | 24. 5 | 17. 0 | 24. 5 | 17.0 |
| Example 1 | Discharge | 5.21 | 0.31 | 29. 1 | 35. 5 | 42. 2 | 91. 3 | 88. 2 | 77.1 |
| | Charge | 4.06 | 0.19 | 29. 5 | 36. 7 | 53. 0 | - | - | - |
| Comparative example 1 | Discharge | 6.73 | 0.39 | 32. 4 | 40. 5 | 51. 0 | 86. 9 | 86. 6 | 87.8 |
| | Charge | 4.36 | 0.29 | 32. 5 | 41. 4 | 44. 7 | - | - | - |

As shown in Tables 2 and 3, it was confirmed that the value of the initial DCR was reduced by reducing the standard deviation of temperature rise during high rate discharging.

Furthermore, it was confirmed that by reducing the standard deviation of temperature rise during high rate discharging, as shown in Figure 4, the mass loading of the positive electrode tended to increase. In other words, it was confirmed that as the energy density increased, the reduction rate of DCR tended to increase.

Furthermore, it was confirmed that by reducing the standard deviation of the temperature rise during high rate discharging, as shown in FIG. 5, the increase in DCR when the number of cycles increased tended to be suppressed. From this result, it was inferred that other cycle characteristics, such as capacity after multiple cycles, were similarly excellent.

As shown in Table 3 and FIGS. 6 and 7, it was confirmed that by reducing the standard deviation of temperature rise during high rate charging, the decrease in the charge capacity ratio during high rate charging tended to be suppressed, resulting in excellent rate characteristics.

### [Example 2]

### (Preparation of Positive electrode)

96.5 parts by mass of NMC811 (Li(Ni_{0.8}Mn_{0.1}Co_{0.1})O₂ as positive electrode material, 1.1 parts by mass of carbon black (primary particle Dₙ₅₀: 100 nm), 0.3 parts by mass of fibrous carbon with an average fiber diameter of 150 nm and an average fiber length of 6 µm, 0.1 parts by mass of a multi-walled carbon nanotube (MWCNT) and NMP solution containing 2.0 parts by mass of PVdF were weighed and mixed in a kneader. Thereafter, the mixture was mixed in a kneader while appropriately adding NMP to prepare a slurry for positive electrode with adjusted viscosity.

In addition, a 50% particle diameter in the number-based cumulative particle size distribution, (Dₙ₅₀) of the primary particles of positive electrode active material, NMC811 was 0.5 µm, and a 50% particle diameter in the number-based cumulative particle size distribution, (Dₙ₅₀) of the secondary particles was 10.1 µm.

The slurry for positive electrode was applied onto an aluminum foil with a thickness of 20 µm using a roll coater, dried, and then vacuum dried to obtain a positive electrode sheet. By roll pressing, a thickness of the positive electrode mixture layer was adjusted to 53 µm, a mass loading of the positive electrode mixture layer was 11.3 mg/cm² and a density of the positive electrode mixture layer was adjusted to 3.2 g/cm³.

### (Preparation of Negative electrode)

A slurry for negative electrode was obtained in the same manner as in Example 1.

The slurry for negative electrode was applied onto a copper foil with a thickness of 20 µm using a roll coater, dried, and then vacuum dried to obtain a negative electrode sheet. By roll pressing, a thickness of the negative electrode mixture layer was adjusted to 88 µm, a mass loading of the negative electrode mixture layer was 8 mg/cm² and a density of the negative electrode mixture layer was adjusted to 1.4 g/cm³.

### (Production of Laminated Full Cell)

A laminated full cell for evaluation in Example 2 was produced in the following manner in a glove box maintained in a dry argon gas atmosphere with a dew point of -80°C or less.

The positive electrode sheet and negative electrode sheet obtained in the preparation of positive electrode and the preparation of negative electrode were punched out to obtain a positive electrode and negative electrode having an area of 20 cm². An Al tab was attached to an Al foil of the positive electrode, and a Ni tab was attached to a Cu foil of the negative electrode. A microporous polypropylene membrane as a separator was sandwiched between the negative electrode and positive electrode to obtain a laminated cell provided with 5 layers of negative electrodes and 4 layers of positive electrodes, and separators each of which was disposed between the negative electrode and the positive electrode. The entire of the laminated cell except for the tabs was wrapped in an aluminum laminate packaging material, and 1800 µL of an electrolyte solution was injected thereinto. Thereafter, an opening was sealed by heat fusion to produce a laminated full cell for evaluation as a secondary battery. The electrolyte solution was prepared by mixing a solvent that is a mixture of ethylene carbonate, ethyl methyl carbonate, and dimethyl carbonate at a volume ratio of 3:5:2 with vinylene carbonate (VC) so that the concentration of vinylene carbonate became 1% by mass and further dissolving LiPF₆ as an electrolyte in thus obtained mixture so that the concentration of LiPF₆ became 1.2 mol/L. Further, the design capacity of the laminated full cell for evaluation was 570 mAh, and a capacity ratio (negative electrode/positive electrode) was 1.1.

### [Comparative example 2]

A positive electrode sheet and a negative electrode sheet were produced in the same manner as in Comparative Example 1 except that the mass loading of the positive electrode mixture layer was 11.3 mg/cm² and the mass loading of the negative electrode mixture layer was 8 mg/cm².

### (Production of laminated full cell)

A laminated full cell for evaluation was produced in the same manner as in Example 2 using the positive electrode sheet produced in Comparative Example 2 and the negative electrode sheet produced in Comparative Example 2.

Each of the laminated full cells produced in Example 2 and Comparative Example 2 were subjected to pre-charging and aging treatment.

Pre-charging was performed by placing the laminated full cell in a thermostatic chamber set at 45°C under the conditions of CC/CV 0.03C, 3.4V 0.01C cut off. Gas was vented after pre-charging.

Aging treatment was performed as follows. First, initial charging was performed at 45°C under the conditions of CC/CV 0.1C, 4.2V 0.02C cut off. After the first charging, the laminated full cell was held for 12 hours to degas it. Next, the first discharging was performed at 25°C under the conditions of CC 0.1C and 2.8V. Then, the second charging was performed at 25°C under the conditions of CC/CV 0.2C, 4.2V, 0.05C cut off, and the second discharging was performed at 25°C under the conditions of CC 0.2C, 2.8V.

### (Charging/Discharging Evaluation of Laminated Full Cell)

In the laminated full cell after the above aging, σ/A (°C/Ah) was determined in the same manner as in Example 1, and it was 0.32 (°C/Ah) in Example 2, and 0.39 (°C/Ah) in Comparative Example 2.

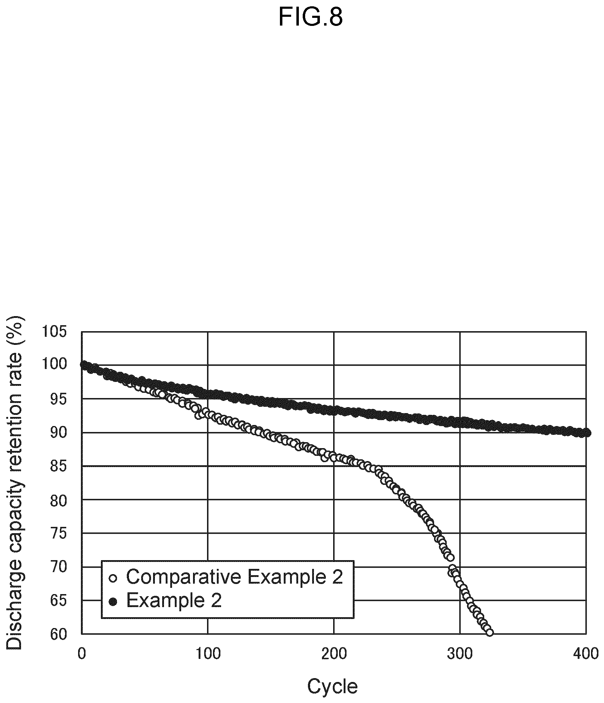

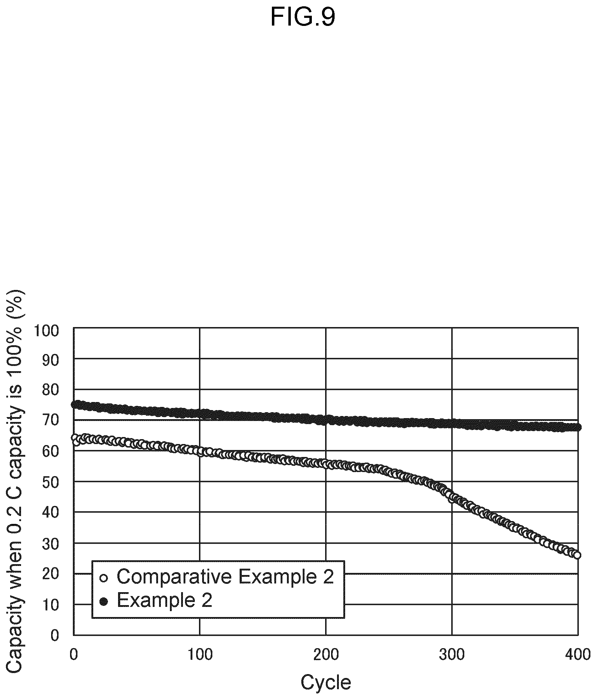

In the laminated full cell after the above aging, a charging and discharging process at a high rate was repeated in which charging at 45°C was performed under the conditions of CC 6C, 4.2V cut off, and then discharging at 45°C was performed under the conditions of CC 5C, 2.8V cut off. The results of the cycle test are shown in FIGS. 8 and 9.

As shown in FIG. 8, Example 2 had excellent cycle characteristics at a high rate despite having the same cell capacity as Comparative Example 2. In Comparative Example 2, the discharge capacity retention rate sharply decreased from around 230 cycles, but in Example 2, the decrease in discharge capacity retention rate was gradual even after 400 cycles of charging and discharging at a high rate.

FIG. 9 is a graph showing the ratio of discharge capacity at 5C charging and discharging, when the discharge capacity at 0.2C charging and discharging is taken as 100%. The decrease in discharge capacity during charging and discharging at a high rate in Example 2 was smaller than in Comparative Example 2, and the discharge capacity at a high rate was excellent.

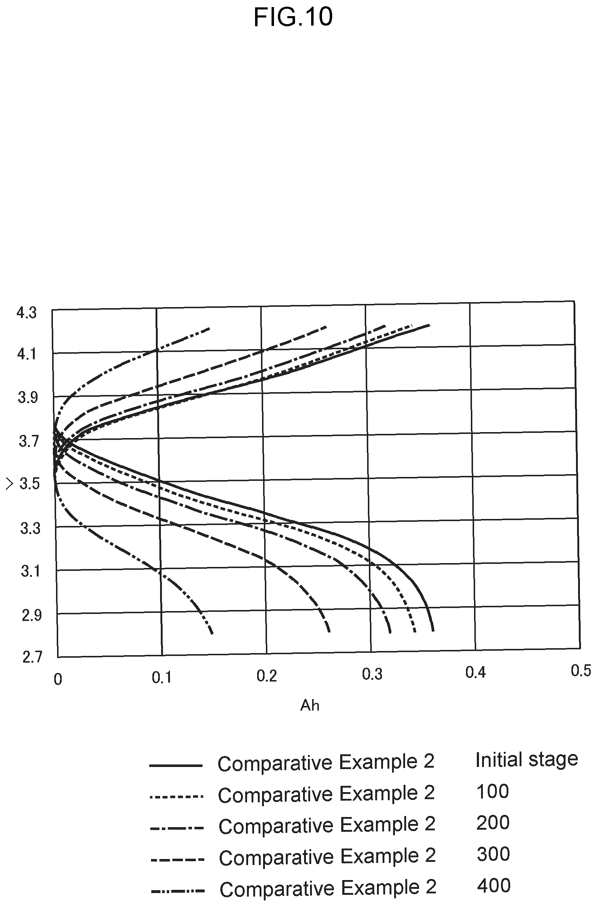

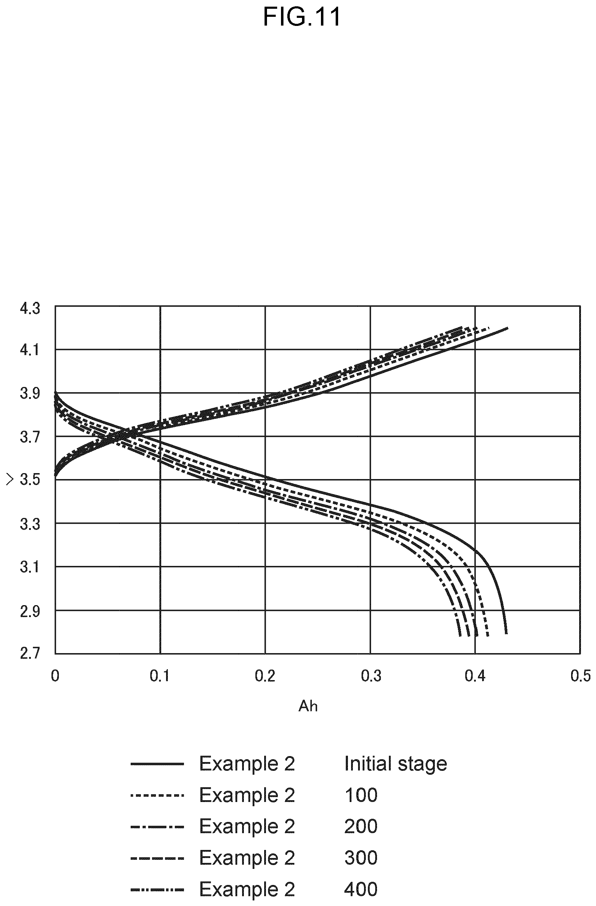

FIGS. 10 and 11 show voltage curves when charging and discharging at a high rate in Example 2 and Comparative Example 2. As shown in FIG. 10, Comparative Example 2 showed voltage curves with a large IR drop from the beginning of the cycle, and the deterioration as the cycle progressed was large. On the other hand, as shown in FIG. 11, in Example 2, the IR drop was small and the change in the voltage curves as the cycle progressed was small.

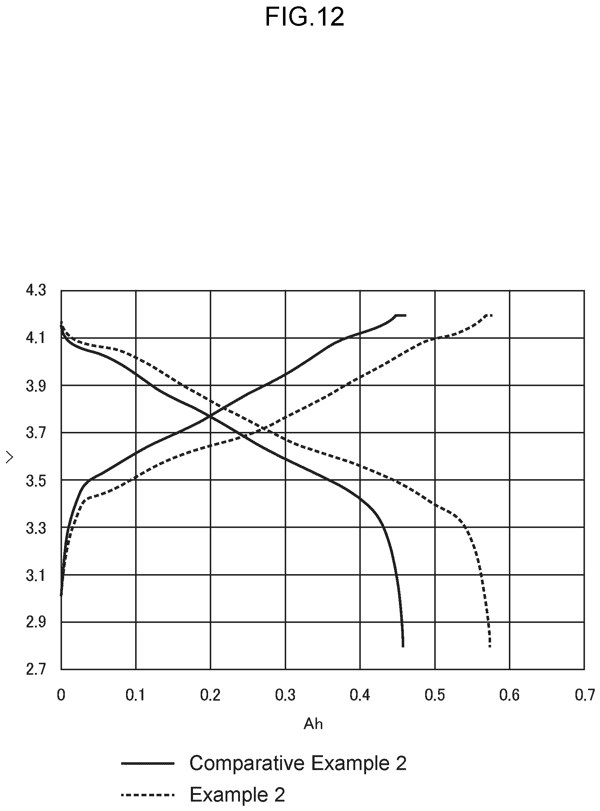

In Example 2 and Comparative Example 2 after 400 cycles of charging and discharging at a high rate, charging was performed at 25°C under the conditions of CC/CV 0.2C, 4.2V, 0.05C cut off, and then discharging was performed at 25°C under the conditions of CC 0.2C and 2.8V cut off. The results are shown in FIG. 12.

As shown in FIG. 12, almost no capacity deterioration was observed in Example 2 even after 400 cycles, and the shape of the voltage curves were also good. On the other hand, in Comparative Example 2, the capacity was small and a curve shape with high resistance was exhibited, and deterioration of the cell was confirmed.

The entire contents of the disclosures by Japanese Patent Application No. 2022-179914 filed on November 9, 2022 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. A secondary battery comprising: a plurality of positive electrodes provided with a positive electrode current collector and a positive electrode mixture layer including a positive electrode active material, which is disposed on the positive electrode current collector; a plurality of negative electrodes provided with a negative electrode current collector and a negative electrode mixture layer including a negative electrode active material, which is disposed on the negative electrode current collector; and a packaging material that accommodates the positive electrodes and the negative electrodes,
wherein the secondary battery has a structure formed by laminating the positive electrodes and the negative electrodes in a thickness direction, and
wherein the positive electrode mixture layer includes a fibrous carbon, and in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.

2. The secondary battery according to claim 1, wherein the σ/A is 0.30 (°C/Ah) or less when the secondary battery is discharged from the fully charged state to the discharge cut-off voltage with a current of 5C.

3. The secondary battery according to claim 1, wherein the σ/A is 0.25 (°C/Ah) or less when the secondary battery is charged from a fully discharged to a charge cut-off voltage with a current of 5C.

4. The secondary battery according to claim 1, wherein an average electrode area per positive electrode is from 20 cm² to 10,000 cm².

5. The secondary battery according to claim 1, wherein the secondary battery is a laminate type.

6. The secondary battery according to claim 5, wherein a number of layers of each of the positive electrodes and the negative electrodes is 4 or more.

7. The secondary battery according to claim 1, wherein the secondary battery is a winding type.

8. The secondary battery according to claim 7, wherein a number of winding is 4 or more.

9. The secondary battery according to claim 1, wherein the positive electrode mixture layer further includes carbon black.

10. The secondary battery according to claim 1, wherein a thickness of the positive electrode mixture layer and a thickness of the negative electrode mixture layer are each independently 30 µm or more.

11. The secondary battery according to claim 1, wherein a density of the positive electrode mixture layer is 3.0 g/cm³ or more, and a density of the negative electrode mixture layer is 1.3 g/cm³ or more.

12. The secondary battery according to claim 1, wherein a mass loading of the positive electrode mixture layer is 10.0 mg/cm² or more, and a mass loading of the negative electrode mixture layer is 5.0 mg/cm² or more.

13. The secondary battery according to claim 1, wherein the positive electrode active material includes at least one selected from LiNiₓMn_{y}Co_{z}Al_{w}O₂, wherein each of x, y, z, w≥0 and x+y+z+w=1, LiMPO₄, wherein M is one or more selected from Fe, Co, Mn or Ni, or LiMnₐNi_{b}O₄, wherein each of a, b≥0 and a+b=2.

14. The secondary battery according to claim 1, wherein the positive electrode active material includes LiNiₓMn_{y}Co_{z}Al_{w}O₂, wherein each of x, y, z, w≥0 and x+y+z+w=1.

15. The secondary battery according to claim 1, wherein the positive electrode active material includes LiMPO₄, wherein M is one or more selected from Fe, Co, Mn or Ni.

16. The secondary battery according to claim 15, wherein a density of the positive electrode mixture layer is 2.0 g/cm³ or more, and a density of the negative electrode mixture layer is 1.3 g/cm³ or more.

17. The secondary battery according to claim 1, wherein the negative electrode active material includes at least one selected from Si, SiOₓ, wherein 0<x≤2, soft carbon, hard carbon, graphite, composite of silicon and carbon, Li₄Ti₅O₁₂, or metal Li.

18. The secondary battery according to claim 1, wherein the negative electrode active material includes graphite.

19. A positive electrode comprising a positive electrode current collector and a positive electrode mixture layer including a positive electrode active material, which is disposed on the positive electrode current collector,
wherein the positive electrode mixture layer includes a fibrous carbon, and
wherein, when forming a secondary battery provided with a plurality of the positive electrodes, a plurality of negative electrodes, and a packaging material that accommodates the positive electrodes and the negative electrodes in which the secondary battery has a structure formed by laminating the positive electrodes and the negative electrodes in a thickness direction, in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.

20. A composition for a positive electrode mixture layer used for formation of a positive electrode mixture layer including a positive electrode active material,
wherein the composition for a positive electrode mixture layer includes a fibrous carbon, and
wherein, when forming a secondary battery provided with a plurality of the positive electrodes provided with a positive electrode current collector and a positive electrode mixture layer formed from the composition for a positive electrode mixture layer, which is disposed on the positive electrode current collector, a plurality of negative electrodes, and a packaging material that accommodates the positive electrodes and the negative electrodes in which the secondary battery has a structure formed by laminating the positive electrodes and the negative electrodes in a thickness direction, in a case of a standard deviation of a temperature rise at temperature measurement points on the packaging material being σ (°C) and a rated capacity of the battery being A (Ah), σ/A is 0.35 (°C/Ah) or less when the secondary battery is discharged from a fully charged state to a discharge cut-off voltage with a current of 5C.
